# EUROPÄISCHE PATENTSCHRIFT

(11) **EP 1 233 000 B1**
(45) Veröffentlichungstag und Bekanntmachung des Hinweises auf die Patenterteilung: **05.04.2006**
(21) Anmeldenummer: 02001741.4
(22) Anmeldetag: 25.01.2002
(51) Int. Cl.: C01F 5/30, C01B 9/02, C01B 9/04

(54) **Verfahren zur Entbromierung von Chloriden**
Process for debromination of chlorides
Procédé de débromination de chlorures

(30) Priorität: 20.02.2001 DE 10107943
(43) Veröffentlichungstag der Anmeldung: 21.08.2002
(73) Patentinhaber: Schüssler Novachem GmbH, 06108 Halle (DE)
(72) Erfinder: Reichenbach, Sebastian, 06108 Halle (DE)
(74) Vertreter: Hauck, Graalfs, Wehnert, Döring, Siemons

(56) Entgegenhaltungen:
- DD-A- 285 585
- DE-A- 2 509 517
- DE-A- 19 830 310
- DE-A- 19 839 513
- GB-A- 1 247 482
- US-A- 5 980 854

## Beschreibung

Die vorliegende Erfindung betrifft ein Verfahren zur Entbromierung gemäß dem Oberbegriff von Patentanspruch 1.

Chloride werden beispielsweise im großtechnischen Maßstab durch übertägiges Aussolen aus Salzlagerstätten gewonnen, beispielsweise Magnesiumchlorid (MgCl₂) aus Carnallit-(KCl·MgCl₂·6H₂O)- oder Bischofit (MgCl₂·6H₂O)-Lagerstätten. Bei der Gewinnung aus Carnallit-Lagerstätten erfolgt zunächst eine Trennung des Magnesiumchlorides aus der Mischung Kaliumchlorid-Magnesiumchlorid (aus dem Doppelsalz Carnallit). Aus einer reinen Bischofit-Lagerstätte erfolgt direkt die Aussolung einer Magnesiumchloridlösüng.

Bei der untertägigen Chloridgewinnung (Kaliumchlorid) verbunden mit Heißlöseverfahren, Flotation etc. entsteht ebenfalls aus der Trennung des Doppelsalzes Carnallit eine anfallende Magnesiumchloridlösung. Hier jedoch mit dem primären Ziel, einen Kaliumchlorid-Dünger herzustellen.

Bei den vorstehend genannten Verfahren resultiert eine Magnesiumchloridlösung, die z.B. mit einer Konzentration im Bereich eines MgCl₂-Gehaltes von 30-33 % verkauft oder weiterverarbeitet wird. Der Verunreinigungsgrad ist unterschiedlich, je nach Lagerstätte, Hersteller und nachgeschalteten Aufbereitungsstufen (Metallfällung, Entsulfatisierung etc.).

Es ist jedoch bei einer derartigen Magnesiumchloridlösung aus allen vorgenannten Gewinnungsprozessen aufgrund der natürlichen Gegebenheiten und der Löslichkeitsverhalten ein Bromgehalt von 3000-8000 mg/kg festzustellen.

Ähnliche Gegebenheiten treten bei anderen Chloriden bzw. Chloridlösungen auf.

Auch die aus Seewasser gewonnenen Chloride bzw. Chloridlösungen haben einen entsprechenden Verunreinigungsgrad mit Brom (Gehalt an Bromiden).

Für einige Anwendungsfälle (beispielsweise pharmazeutische Produkte, Magnesium-Metallgewinnung u.ä.) ist es jedoch unabdingbar, einen minimalen Bromanteil in der Chloridlösung bzw. den daraus zu erzeugenden Feststoffen (beispielsweise Hexahydrat) zu gewährleisten. Eine Reduzierung dieses Bromgehaltes ist nicht durch einfache Fällung o.ä. möglich.

Aus der DE 198 39 513 A1 ist ein Verfahren zur Entbromung von aus Bischofit- oder Carnallitlagerstätten gewonnener Magnesiumchloridlösung bekannt, bei dem einer klaren Magnesiumchlorid-Sole eine Natriumhypochloritlösung zugesetzt wird. Das erhaltene Lösungsgemisch wird unter Erwärmen gerührt oder umgewälzt, und das dabei entstehende, Bromgas enthaltende Brüdengas wird aufgefangen und abgeführt.

Desweiteren ist aus der DE-A-19830310 ein Verfahren zur Entbromierung gemäß dem Oberbegriff von Patentanspruch 1 bekannt. Bei diesem bekannten Verfahren werden der zu entbromierenden Lösung die Substanz zum Sauerstellen und das Wasserstoffperoxid im kalten Zustand der Lösung zugesetzt. Der eigentliche Abtreibvorgang kann durch Sieden oder

Strippen der Lösung erfolgen.

Der vorliegenden Erfindung liegt die Aufgabe zugrunde, ein Verfahren der angegebenen Art zu schaffen, mit dem sich besonders schnell die hinsichtlich der Grenzwerte des Bromgehaltes gestellten Anforderungen erreichen lassen.

Diese Aufgabe wird erfindungsgemäß bei einem Verfahren der angegebenen Art durch die kennzeichnenden Merkmale von Patentanspruch 1 gelöst.

Bei dem erfindungsgemäßen Verfahren werden der zu entbromierenden Chloridlösung, insbesondere in der Form einer Sole oder Endlauge, eine geeignete Substanz zum Sauerstellen und nachfolgend Wasserstoffperoxid (H₂O₂) zugesetzt. Hierdurch wird das im Chlorid enthaltene Bromid zu Brom oxidiert und ausgetrieben. Das dabei entstehende Gas, das überwiegend Brom enthält, wird aufgefangen und abgeführt.

Die Erfindung betrifft vorzugsweise die Entbromierung von Magnesiumchloridsole mit dem Ziel der Herstellung von kristallinem MgCl₂·6H₂O.

Für die Erfindung ist es wesentlich, daß die Chloridlösung auf einen geeigneten, im sauren Bereich liegenden pH-Wert gebracht wird, damit es auf optimale Weise mit dem Wasserstoffperoxid reagieren kann. Es hat sich dabei gezeigt, daß besonders gute Ergebnisse erzielt werden, wenn ein Sauerstellen auf einen pH-Wert von ≤4, vorzugsweise 0-3, stattfindet. Wie erwähnt, ist dieser Bereich für die Bromaustreibung besonders geeignet.

Als geeignete Substanz zum Sauerstellen wird vorzugsweise Salzsäure verwendet.

vorzugsweise werden die Substanz zum Sauerstellen und das wasserstoffperoxid dem Chlorid unter Rühren und/oder Erwärmen zugesetzt.

Bei einer speziellen Ausführungsform des erfindungsgemäßen Verfahrens führt man während der Reaktion eine Beaufschlagung mit Luft durch. Hierbei werden dem Chlorid, vorzugsweise der Sole, die Substanz zum Sauerstellen und Wasserstoffperoxid zugesetzt, wonach durch das Reaktionsgemisch Luft geleitet wird. Dabei wird Brom freigesetzt (ausgeblasen).

Im einzelnen zeichnet sich das Erfindungsgemäße Verfahren dadurch aus, daß man zuerst die Substanz zum Sauerstellen und nach weiterem Erhitzen der Lösung, insbesondere bis zum beginnenden Sieden, Wasserstoffperoxid zusetzt. Dieses Verfahren wird zweckmäßigerweise so durchzweckmäßigerweise so durchgeführt, daß zuerst die Lösung erwärmt wird und bei einer Temperatur im Bereich von 100 °C die Substanz (Salzsäure) zugesetzt wird. Die Temperatur wird dann weiter bis zum beginnenden Sieden erhöht. Dann wird Wasserstoffperoxid langsam zugegeben. Die Lösung färbt sich dabei tiefbraun, und Brom entweicht. Zur vollständigen Bromentfernung wird dann nach einigen Minuten weiteres Wasserstoffperoxid zugesetzt. Die Lösung wird weiter ausgekocht, wonach vorzugsweise mit Magnesiumkarbonat neutralisiert wird. Während des Abkühlens wird zweckmäßigerweise mit entsalztem Wasser auf das Ausgangsvolumen wieder aufgefüllt.

Das bei der Reaktion in gasförmiger Form entweichende Brom kann je nach den Ausgangsstoffen und Verfahrensbedingungen mehr oder weniger verunreinigt sein, insbesondere Chloranteile und Wasserdampfanteile enthalten. Es kann zur Entfernung dieser Verunreinigungen gereinigt bzw. gewaschen werden.

Eine weitere Variante des erfindungsgemäßen Verfahrens sieht vor, daß man das bei der Reaktion entweichende Brom in eine alkalische Lösung einführt und in Bromsalze überführt. Als alkalische Lösungen kommen hierbei vorzugsweise NaOH-, KOH- oder NH₃-Lösungen in Betracht. Die Bromsalze setzen sich in diesen Lösungen ab, und können separiert und verkauft werden.

Das bei dem erfindungsgemäßen Verfahren zurückbleibende Chlorid (Chloridlösung) ist weitgehend bromfrei bzw. bromidfrei (<100 mg/kg) und erfüllt somit die hinsichtlich der Grenzwerte gestellten Anforderungen.

Neben dem bereits erwähnten Magnesiumchlorid (MgCl₂) können bei dem erfindungsgemäßen Verfahren auch andere Chloride eingesetzt werden, insbesondere Natriumchlorid (NaCl₂) und Calciumchlorid (CaCl₂).

Die vorstehend beschriebenen Verfahren können auch in Gegenwart von Füllkörpern durchgeführt werden.

Die Erfindung wird nachfolgend anhand von Ausführungsbeispielen im einzelnen erläutert.

### Beispiele 1

Es wurde eine Entbromierung von Magnesiumchloridsole mit dem Ziel der Herstellung einer 32%igen Sole durchgeführt. Dabei fand eine enteisente Sole Verwendung. 1 1 Sole wurden erwärmt, und bei 100 °C wurden 10 ml HCl (35%ig) zugesetzt. Die Temperatur wurde weiter erhöht bis zum beginnenden Sieden. Dann wurden 10 ml Wasserstoffperoxid (30%ig) langsam zugegeben. Die Sole färbte sich tiefbraun, und Brom entwich.

Zur vollständigen Bromentfernung wurden nach 10 min weitere 5 ml H₂O₂ zugesetzt. Es wurde dann noch 15 min ausgekocht, wonach mit ca. 1 g Magnesiumkarbonat neutralisiert wurde während des Abkühlens (T < 100 °C) wurde mit entsalztem Wasser auf 1 1 Gesamtvolumen aufgefüllt.

### Beispiel 2

Es wurde das gleiche Verfahren wie in Beispiel 1 durchgeführt, mit dem einzigen Unterschied, daß eine eisenhaltige Ausgangssole verwendet wurde.

Die gemäß den Beispielen 1 und 2 entbromierten Solen hatten folgende Eigenschaften:

| Bestandteil/Paramter | Einheit | Beispiel 5 | Beispiel 6 |
|---|---|---|---|
| Dichte | g/cm³ | 1,295 | 1,302 |
| Magnesium | g/l | 105 | 107 |
| Calcium | g/l | <0,5 | 0,55 |
| Kalium | g/l | 2,3 | 2,1 |
| Natrium | g/l | 2,5 | 4,49 |
| Eisen | mg/l | <0,1 | <0,1 |
| Chlorid | g/l | 326 | 327 |
| Sulfat | g/l | 2,02 | 2,32 |
| Hydrogenkarbonat | g/l | 0, 75 | 1,97 |

Aufgrund der hohen Konzentration kam es bei längerem Stehen zur Bildung von tafelförmigen rhombischen Kristallen. Die Kristalle enthielten neben Magnesium eine signifikante Menge Kalium. Bei Berücksichtigung der anhaftenden Sole handelte es sich um Carnallitkristalle. Zu einem ähnlichen Ergebnis gelangte man bei Abkühlung der Sole im Kühlschrank. Die Kristallform war dann nadelförmig. In beiden Fällen lag das molare verhältnis ungefähr bei 1:1.

### 3 Beispiel

Hierzu wurde ein emaillierter 2,5 cbm Rührwerksapparat mit Impellerrührern mit einer Menge von 1.600 kg pH-neutraler, entsulfatisierter Magnesiumchloridlösung (32 % MgCl₂₋Gehalt, 6.450 mg Br-Gehalt) mit einer Temperatur von 15 °C gefüllt.

Nach Inbetriebnahme des Rührers und Heizbeginn, über die Mantelheizung des Apparates mit 6 bar Sattdampf, wurden im Zeitraum des Aufheizens auf 120 °C über eine Mebrandosierpumpe insgesamt 16 kg einer 35%igen Salzsäure zugeführt.

Der Brüdenabzug des Apparates ist über eine emaillierte Rohrleitung mit einem Teflon-Tauchrohr bis kurz über den Boden in einen 2.000 Liter-GFL-Bottich geführt. Der Bottich ist mit einer 15%igen NaOH-Lösung bis 20 cm unter den Rand gefüllt und mit einer Kunststoff-Abzugsleitung an einen Abluftwäscher angeschlossen.

Nach Erreichen der Siedetemperatur von ca. 125 °C wurde über eine weitere Membrandosierpumpe über ein Tauchrohr der Sole H₂O₂ (30%ig) langsam zugesetzt. Der Vorgang des Zudosierens wurde im Zeitraum 10 min (Beginn bis Ende) vorgenommen. In diesem Zeitraum sind 32 kg H₂O₂ zum Einsatz gebracht worden.

3 Minuten nach Dosierbeginn des Wasserstoffperoxides wurde zusätzlich Betriebsluft über ein am Bodenauslauf des Rührwerksapparates angebautes Rückschlagventil zugeführt.

3 Minuten nach Beendigung des Zudosierens wurde auch die Betriebsluftzufuhr abgestellt.

Der abgehende Brüden hatte das enthaltene Brom in die NaOH-Lösung im Bottich eingetragen, wo jeweils nach entsprechender Anreicherung (mehrere Chargen) und Verweildauer Natriumbromidkristalle zur weiteren Verarbeitung ausfielen.

Eine Probennahme im Rührwerksapparat mit anschließender Untersuchung zeigte einen Bromgehalt unterhalb des internen Grenzwertes von 100 mg/kg.

Nun erfolgte die Neutralisierung des pH-Wertes durch Zugabe einer Magnesiumhydroxyidsuspension. Anschließend wurde durch weitere Wärmezufuhr unter Einsatz eines Unterdrucks bis auf eine Konzentration von 47 % MgCl₂ aufkonzentriert. Die resultierende Schmelze wurde über einen Kühlwalzenkristallisator zu Schuppen verarbeitet.

Von Zeit zu Zeit wurden auch Chargen mit einer Konzentration von ca. 40 % teilweise in einen Vakuumtrockner gepumpt und zu kristallinem Hexahydrat mit ebenfalls ca. 47 % getrocknet. Der Rest der Charge wurde dann jeweils mit demineralisiertem Wasser im abgekühlten Rührwerksapparat auf eine Konzentration von 33 % rückverdünnt und mit Kühlsole im Mantelraum unter Einsatz des Impellerrührers auf eine Temperatur von ca. -4 °C gebracht. Nach Erreichen der Temperatur wurde die Sole in einen Kunststofftank mit konischem Bodenauslauf gepumpt.

Nach einiger Verweilzeit fielen Kristalle aus, die einen wesentlichen Teil des noch in der Sole enthaltenen KCl (in Bindung mit MgCl₂) beinhalten, so daß man einen KCl-Gehalt von unter 300 mg/kg in der überstehenden, bromarmen MgCl₂₋Lösung erreichte. Parallel fiel hierbei ein Großteil des noch enthaltenen NaCl aus, so daß hier ein Grenzwert von 1.300 mg/kg unterschritten wurde.

Das Resultat waren eine extrem eisenarme Sole bzw. hochreine Kristalle, die der in der European Pharmacopeia und in der USP geforderten Qualität entsprechen.

Im beschriebenen 2,5 cbm Rührwerksapparat wurde auf nahezu deckungsgleiche Weise auch eine Calciumchlorid-Lösung verarbeitet. Auch hier konnten Grenzwerte von <100 mg schnell erreicht werden.

## Patentansprüche

1. Verfahren zur Entbromierung von aus Lagerstätten, Seewasser u. dgl. gewonnenen bromidhaltigen Chloridlösungen, insbesondere Magnesiumchloridlösungen, durch Sauerstellen, Erhitzen und Reagierenlassen der Lösung mit Wasserstoffperoxid, **gekennzeichnet durch** die folgenden Schritte:
a. Erwärmen der Lösung auf etwa 100° - 120°C;
b. Zusetzen der Substanz zum Sauerstellen, um den pH-Wert der Lösung auf ≤ 4 zu bringen;
c. Erhöhen der Temperatur der Lösung bis zum beginnenden Sieden;
d. Zusetzen von Wasserstoffperoxid während des Siedens; und
e. weiteres Eindampfen der Lösung mit nachfolgendem Neutralisieren derselben und Abkühlen.

2. Verfahren nach Anspruch 1, **dadurch gekennzeichnet, daß** man die Lösung sauerstellt, indem man Salzsäure zuführt.

3. Verfahren nach Anspruch 1 oder 2, **dadurch gekennzeichnet, daß** man die Lösung als Sole reagieren läßt.

4. Verfahren nach einem der Ansprüche 1 oder 2, **dadurch gekennzeichnet, daß** man die Lösung als Endlauge reagieren läßt.

5. Verfahren nach einem der vorangehenden Ansprüche, **dadurch gekennzeichnet, daß** man während der Reaktion eine Beaufschlagung mit Luft durchführt.

6. Verfahren nach einem der vorangehenden Ansprüche, **dadurch gekennzeichnet, daß** man das bei der Reaktion entweichende Brom in eine alkalische Lösung einführt und in Bromsalze überführt.

## Claims

1. A process for the debromination of bromine-containing chloride solutions, especially magnesium chloride solutions, obtained from deposits, sea water etc. by acidification, heating and reacting the solution with hydrogen peroxide, **characterized by** the following steps:
a. Heating the solution to about 100°-120°C;
b. adding the acidification substance in order to bring the pH of the solution to ≤ 4;
c. increasing the temperature of the solution up to the beginning boiling;
d. adding of hydrogen peroxide during the boiling; and
e. further evaporating of the solution with following neutralizing of the same and cooling.

2. The process according to claim 1, **characterized by** acidifying the solution by adding hydrochloric acid.

3. The process according to claim 1 or 2, **characterized by** reacting the solution as brine.

4. The process according to one of the claims 1 or 2, **characterized by** reacting the solution as discard solution.

5. The process according to one of the preceding claims, **characterized by** carrying out an admission with air during the reaction.

6. The process according to one of the preceding claims, **characterized by** introducing the bromine escaping during the reaction into an alkaline solution and converting the same into bromine salts.

## Revendications

1. Procédé de débromination de solutions de chlorure contenant du bromure qu'on trouve dans les gisements, l'eau de mer et autres analogues, en particulier des solutions de chlorure de magnésium, par réglage du pH dans une gamme acide, chauffage et mise à réagir de la solution avec du peroxyde d'hydrogène, **caractérisé par** les étapes suivantes:
a. chauffage de la solution entre environ 100° et 120°C;
b. addition de la substance de réglage du pH, pour amener le pH de la solution a ≤ 4;
c. augmentation de la température de la solution jusqu'à un commencement d'ébullition;
d. addition de peroxyde d'hydrogène pendant l'ébullition, et
e. poursuite de l'évaporation de la solution avec neutralisation subséquente de celle-ci et refroidissement.

2. Procédé selon la revendication 1, **caractérisé en ce qu'**on règle le pH de la solution en ajoutant de l'acide chlorhydrique.

3. Procédé selon la revendication 1 ou 2, **caractérisé en ce qu'**on laisse réagir la solution comme des sols.

4. Procédé selon l'une quelconque des revendications 1 ou 2, **caractérisé en ce qu'**on laisse réagir la solution comme lessive finale.

5. Procédé selon l'une quelconque des revendications précédentes, **caractérisé en ce que** pendant la réaction on effectue une injection d'air.

6. Procédé selon l'une quelconque des revendications précédentes, **caractérisé en ce qu'**on introduit le brome apparu lors de la réaction dans une solution alcaline et qu'on le transforme en sels de brome.
